# EUROPEAN PATENT SPECIFICATION

(11) **EP 3 153 363 B1**
(45) Date of publication and mention of the grant of the patent: **19.02.2020**
(21) Application number: 16192697.7
(22) Date of filing: 06.10.2016
(51) Int. Cl.: B60T 7/12

(54) **SYSTEM AND METHOD FOR PREVENTING THE LOSS OF GOODS FROM A VEHICLE, IN PARTICULAR FOR GOODS TRANSPORTATION.**
SYSTEM UND VERFAHREN ZUR VERMEIDUNG VON WARENVERLUST AUS EINEM FAHRZEUG, INSBESONDERE NUTZFAHRZEUG
SYSTÊME ET PROCÉDÉ POUR PREVENIR LA PERTE DES MARCHANDISES D'UN VÉHICULE, NOTAMMENT VÉHICULE UTILITAIRE

(30) Priority: 06.10.2015 IT UB20154153
(43) Date of publication of application: 12.04.2017
(73) Proprietor: IVECO MAGIRUS AG, 89079 Ulm (DE)
(72) Inventor: LEOKA, Georg, 89075 Ulm (DE); BAUR, Franz, 88480 Achstetten (DE)
(74) Representative: Franzolin, Luigi

(56) References cited:
- EP-A1- 2 072 359
- AU-A1- 2012 265 603
- DE-A1- 19 926 697

## Description

### Technical field of the invention

The invention relates to the field of active prevention systems, in particular for the prevention of the loss of goods from a load compartment of a vehicle, in particular for goods transportation.

### State of the art

The loss of goods from the load compartment of a vehicle for goods transportation can be very dangerous, as it can cause accidents with the vehicles following the vehicle for goods transportation that looses part of the load. Furthermore, the loss of goods leads to administrative punishments for the driver of the vehicle.

The existence of sensors and control lights is known, which are capable of signalling the opening or incorrect closing of a vehicle door. In case of vehicles for goods transportation, this solution is deemed to be insufficient. AU 2012265603 discloses a docking system preventing the park brake of a trailer from its deactivation when a door of the trailer is open.

### Summary of the invention

Therefore, the object of the invention is to avoid the loss of part of or the entire load transported by a vehicle for goods transportation.

The idea on which the invention is based is that of activating and/or automatically maintaining active the parking brake when two conditions occur: the vehicle is stopped AND the load compartment is open or not perfectly closed.

According to a first preferred variant concerning cars, a push button is arranged on the dashboard and allows drivers to deactivate the system, preferably showing in a video, for example on the display of the trip computer, a message warning drivers that they are taking responsibilities for their actions, if necessary recalling the laws that might be broken by so doing.

According to a second preferred variant concerning vehicles for goods transportation, the aforesaid push button is not present so that the inhibition of the deactivation of the parking brake is unconditional until the vehicle is stopped AND the load compartment is open or not perfectly closed. Preferably, when - subsequently - at least one of the previous two conditions is no longer fulfilled or when, in case of application in cars, the aforesaid push button is pressed, the conditions preceding the intervention of the system are restored, namely the parking brake is deactivated if it was previously deactivated or it is maintained active if it was previously active, but its deactivation is no longer inhibited.

Advantageously, in case the vehicle is used for goods transportation, driver can in no way move the vehicle as long as the load compartment is not correctly closed. In other words, if, with a stopped vehicle, the load compartment is not correctly closed, the parking brake is automatically activated or its deactivation is inhibited in case it was already active.

Advantageously, the driver of the vehicle cannot avoid to notice a possible control light signalling the incorrect closing of the load compartment.

Even if the lock of the door of the load compartment is a two-stage lock, which permits a first level of safety locking or closing and a second level of complete or correct closing, the vehicle does not move from the parking condition until the lock closes the door with the level of complete or correct closing.

According to the invention, there are provided a method and a system of prevention of the loss of goods from a vehicle for goods transportation.

The subject-matter of the invention also includes a vehicle for goods transportation provided with the aforesaid system.

The claims describe preferred embodiments of the invention, thus forming an integral part of the description.

### Brief description of the figures

Further objects and advantages of the invention will be best understood upon perusal of the following detailed description of an embodiment thereof (and of relative variants) with reference to the accompanying drawings merely showing non-limiting examples, wherein:

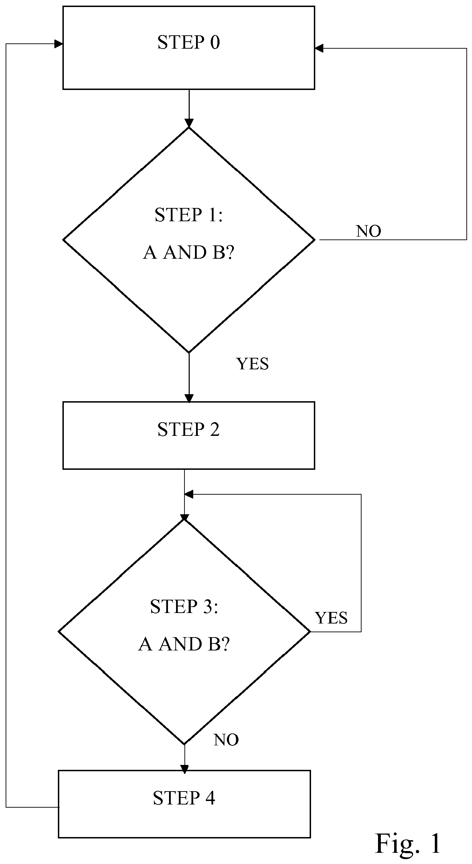

figure 1 shows a block diagram explaining the method according to the invention.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

### Detailed description of embodiments

According to a preferred variant of the invention, the parking brake of a vehicle, car or vehicle for goods transportation is activated when, with a stopped vehicle, the or at least one access door to the load compartment is not correctly closed.

The concept of "correct closing" is well known to a person skilled in the art, as the use of switches is known, which are associated with vehicle doors to detect whether they are open or not correctly closed.

As a matter of fact, some known locks allow users to lock the opening of a door vehicle even if the latter is not completely closed; they are known as two-stage locks. According to the prior art, the vehicle door is correctly closed when the second stage of the lock is activated, so that the door completely and steadily adheres to the vehicle body.

The invention finds application also in loading compartments whose access door/s is/are provided with single stage locks.

The parking brake of the vehicle/car can be electric or electric-pneumatic, but, in any case, it is not deactivated with a stopped vehicle as long as the vehicle doors are not perfectly closed.

With "stopped vehicle" we mean that the vehicle is completely still or that, anyway, its speed is below a predetermined threshold, for example 3 km/h.

According to a preferred embodiment of the invention, if this speed threshold is exceeded by the vehicle, the prevention system does not intervene on the parking brake, thus leaving to the sole control lights or buzzer the task of warning the driver that a door of the load compartment is open or not perfectly closed.

According to the invention, when the door/s of the load compartment is/are correctly closed, the safety system is deactivated and the parking brake goes back to the condition prior to its activation. Therefore, if the parking brake was active, it remains active with no action of inhibition against its deactivation, whereas if it was not active, it is deactivated.

The control method according to the invention can be carried out in a continuous manner by parallely checking the conditions:
A) Stopped vehicle
B) Door of the load compartment open or not closed correctly.

Alternatively, the method continuously monitors only the first (or the second) one of the aforesaid conditions and starts monitoring the second (or the first) one as soon as the first (or the second) one is satisfied.

Preferably, the method is carried out even without the activation of the dashboard, namely without inserting the ignition key in the dashboard or without the recognition of the driver's wireless key or smartcard.

In case of a vehicle for goods transportation, the inhibition of the disengagement of the parking brake preferably is unconditional, which means that the driver can in no way deactivate/end the system/method according to the invention without having correctly closed the load compartment.

On the other hand, only when the vehicle is a car can the dashboard comprise a push button, which allows the driver to deactivate/end the system/method according to the invention.

Figure 1 shows a block diagram explaining the method according to the invention:
Step 0: acquisition of the state of the parking brake;
Step 1: Verification of the conditions A AND B, if both conditions are satisfied (A AND B = YES) then Step 2: activation of the parking brake and inhibition (goods transportation vehicle) of its disengagement or inhibition (goods transportation vehicle) of its disengagement if it was previously engaged, instead, if one of the conditions A AND B is not satisfied (A AND B = NO) return to step 0;
Step 3: Verification of the conditions A AND B (OR C), if both conditions are satisfied (A AND B = YES OR C = NO) then repeat step 3, otherwise (A AND B = NO OR C = YES) Step 4: Restoring the situation acquired in step 0 and back to step 0.

Preferably, when the load compartment is open or not perfectly closed, independently of the static or dynamic condition of the vehicle, an acoustic and/or visual signal is sent to the driver.

Condition C, indicated in brackets, relates to the case of a car provided with the aforesaid deactivation push button and condition "C" corresponds to a signal deriving from the pressing, on the part of the driver, of the push button arranged in the dashboard, which allows the driver to deactivate/stop the method/system described above. Hence, C = YES corresponds to an input following the pressing of the aforesaid push button.

According to the invention, no optical sensor is needed, as the detection of the condition of open door, not completely closed door and closed door can be detected with switches that are know per se, for example placed in the closing lock.

When the vehicle is a car, according to some national laws, drivers can circulate with the load compartment open, provided that some specific safety conditions are satisfied by the driver. Therefore, the system/method according to the invention does not interfere with national laws, although it increases their safety. For this reason, according to a preferred variant of the invention, a push button is present on the dashboard, so as to deactivate the system. Preferably, upon deactivation, a message appears on the display of the trip computer, when available, said message warning the driver of the possible risks arising when circulating with the load compartment open or not completely closed, preferably recalling the relevant national law.

This invention can be advantageously implemented by means of a computer program comprising coding means for carrying out one or more steps of the method, when the program is executed by a computer. Preferably the computer adapted to carry out the method according to the invention coincides with a vehicle processing unit or with the ESP/EBS/ESR/ABS unit.

Therefore, the scope of protection is extended to said computer program and, furthermore, to means that can be read by a computer and comprises a recorded message, said means that can be read by a computer comprising coding means for a program for carrying out one or more steps of the method, when the program is executed by a computer.

The subject-matter of the invention also comprises means that can be read by a computer comprising a recorded program, said means that can be read by a computer comprising program coding means configured for carrying out all the steps of any variant of the method, when said program is executed by a computer.

The non-limiting example described above can be subjected to variations, without for this reason going beyond the scope of protection of the invention, comprising all equivalent embodiments for a person skilled in the art.

When reading the description above, a skilled person can carry out the subject-matter of the invention without introducing further manufacturing details. The elements and features contained in the different preferred embodiments, drawings included, can be combined with one another, without for this reason going beyond the scope of protection of this patent application. The information contained in the part concerning the state of art only serves the purpose of better understanding the invention and does not represent a declaration of existence of the items described. Furthermore, if not specifically excluded by the detailed description, the information contained in the part concerning the state of art can be considered as combined with the features of the invention, thus forming an integral part of the invention. None of the features of the different variants is essential and, therefore, the single features of each preferred variant or drawing can be individually combined with the other variants.

## Claims

1. Method of prevention of the loss of goods, in particular from a vehicle for goods transportation or goods and passenger transportation, comprising a first step of automatically activating and maintaining active the parking brake when two conditions are satisfied
- A: the vehicle is stopped AND
- B: the load compartment is open or not closed correctly, said method being **characterized by** the following steps in cyclic sequence:
- (Step 0) acquisition of the state of the parking brake;
- (Step 1) Verification of the conditions A AND B, if both conditions are satisfied (A AND B = YES) then
- (Step 2) first step of activation of the parking brake and inhibition of its disengagement or inhibition of its disengagement if it was previously engaged,
instead, if one of the conditions A AND B is not satisfied (A AND B = NO) return to step of acquisition (Step 0);
-(Step 3) Verification of the conditions A AND B or verification of the condition C, if both conditions are satisfied (A AND B = YES) or condition C is not satisfied (C=NO) then repeat step of verification of the conditions A AND B or verification of the condition C (Step 3); otherwise (A AND B = NO OR C = YES)
(Step 4): restoring the activation/deactivation condition of the parking brake acquired prior to said first step and repetition of the cycle from the aforesaid acquisition (Step 0), wherein condition C relates to a manual deactivation performed on input of the driver by means of a specific command, when said vehicle is a car.

2. Method according to claim 1, wherein when the vehicle is a vehicle for goods transportation, the first step also provides for the unconditional inhibition of disengagement of the parking brake until said two conditions A and B are satisfied simultaneously.

3. Method according to claim 1, comprising a second step, subsequent to said first step, wherein when at least one of the previous conditions (A and/or B) is no longer satisfied, then the conditions of activation/deactivation of the parking brake preceding the execution of said first step are restored.

4. Method according to any one of the preceding claims, wherein, when said condition B is satisfied, independently of said condition A being satisfied, a first acoustic and/or visual signal is sent to the driver.

5. Method according to claim 3 or 4, wherein when said vehicle is a car, said second step of restoring the preceding conditions can be performed on input of the driver by means of a specific command, and wherein the method comprises a third step of showing a second acoustic and/or visual signal, which may be different from said first acoustic and/or visual signal, aimed at the driver.

6. Method according to any one of the preceding claims, wherein the vehicle is considered stopped when a relative speed of movement is below 3 km/h.

7. System of prevention of the loss of goods from a vehicle for goods transportation comprising processing means (VCU/ESP/EBS/ESR/ABS) adapted to
- monitor and control a state of activation of a vehicle parking brake,
- monitor a static or dynamic condition of the vehicle,
- monitor an open or not completely closed condition of a load compartment
wherein said processing means are configured to perform all the steps of at least claim 1.

8. Vehicle for goods transportation comprising a system of prevention of the loss of goods from the vehicle according to claim 7.

9. Computer program comprising program coding means configured to perform all the steps of any one of claims 1 to 6, when said program is run on a computer.

## Patentansprüche

1. Verfahren zur Verhinderung von Güterverlust, insbesondere von einem Fahrzeug für den Gütertransport oder den Güter- und Passagiertransport, umfassend einen ersten Schritt der automatischen Aktivierung und der Aufrechterhaltung des aktiven Zustands der Feststellbremse, wenn zwei Bedingungen erfüllt sind:
- A: das Fahrzeug steht still UND
- B: der Laderaum ist offen oder nicht korrekt geschlossen,
wobei das Verfahren durch folgende Schritte in zyklischen Abfolgen gekennzeichnet ist:
- (Schritt 0) Erfassung des Status der Feststellbremse;
- (Schritt 1) Überprüfung der Bedingungen A UND B, und falls beide Bedingungen erfüllt sind (A UND B = JA), dann:
- (Schritt 2) erster Schritt der Aktivierung der Feststellbremse und Verhinderung ihrer Lösung oder Verhinderung der Lösung, wenn sie vorher betätigt war,
ansonsten, falls eine der Bedingungen A UND B nicht erfüllt ist (A UND B = NEIN), gehe zurück zum Schritt der Erfassung des Status (Schritt 0);
- (Schritt 3) Verifikation der Bedingungen A UND B oder Verifikation der Bedingung C, falls beide Bedingungen erfüllt sind (A UND B = JA) oder die Bedingung C nicht erfüllt ist (C = NEIN), dann wiederhole den Schritt der Überprüfung der Bedingungen A UND B oder der Überprüfung der Bedingung C (Schritt 3);
ansonsten (A UND B = NEIN ODER C = JA):
- (Schritt 4): Wiederherstellen der Aktivierungs-/Deaktivierungs-Bedingung der Feststellbremse, welche vor dem ersten Schritt und der Wiederholung des Zyklus der vorgenannten Erfassung (Schritt 0) erfasst wurde, wobei die Bedingung C sich auf eine manuelle Deaktivierung bezieht, welche vom Fahrer mittels eines bestimmten Befehls ausgeführt wird, wenn das Fahrzeug ein Auto ist.

2. Verfahren nach Anspruch 1, wobei dann, wenn das Fahrzeug ein Fahrzeug für den Gütertransport ist, der erste Schritt ferner die bedingungslose Verhinderung der Lösung der Feststellbremse, bis die beiden Bedingungen A und B gleichzeitig erfüllt sind, vorsieht.

3. Verfahren nach Anspruch 1, umfassend einen zweiten Schritt im Anschluss an den ersten Schritt, wobei dann, wenn mindestens eine der vorherigen Bedingungen (A und/oder B) nicht länger erfüllt ist, die Bedingungen der Aktivierung/Deaktivierung der Feststellbremse vor der Ausführung des ersten Schritts wiederhergestellt werden.

4. Verfahren nach einem der vorgehenden Ansprüche, wobei, wenn die Bedingung B erfüllt ist, unabhängig der Erfüllung der Bedingung A, eine erstes akustisches und/oder visuelles Signal an den Fahrer übermittelt wird.

5. Verfahren nach Anspruch 3 oder 4, wobei dann, wenn das Fahrzeug ein Auto ist, der zweite Schritt der Wiederherstellung der vorherigen Bedingungen auf die Eingabe des Fahrers mittels eines bestimmten Befehls hin ausgeführt wird, wobei das Verfahren einen dritten Schritt der Darstellung eines zweiten auf den Fahrer gerichteten akustischen und/oder visuellen Signals, welches sich vom ersten visuellen und/oder akustischen Signal unterscheiden kann, umfasst.

6. Verfahren nach einem der vorgehenden Ansprüche, wobei das Fahrzeug als stillstehend angesehen wird, wenn eine relative Geschwindigkeit der Bewegung kleiner als 3 Kilometer/Stunde ist.

7. System zur Verhinderung von Güterverlust von einem Fahrzeug für den Gütertransport, umfassend Verarbeitungsmittel (VCU/ESP/EBS/ESR/ABS), ausgeführt, um
- einen Zustand der Aktivierung einer Fahrzeugfeststellbremse zu überwachen und zu steuern,
- einen statischen oder dynamischen Zustand des Fahrzeugs zu überwachen,
- einen offenen oder nicht komplett geschlossenen Zustand eines Laderaums zu überwachen,
wobei die Verarbeitungsmittel ausgeführt sind, um alle Schritte von zumindest Anspruch 1 auszuführen.

8. Fahrzeug für den Gütertransport, umfassend ein System zur Verhinderung von Güterverlust von dem Fahrzeug nach Anspruch 7.

9. Computerprogramm, umfassend Programmcodemittel, welche ausgeführt sind, um alle Schritte nach einem der Ansprüche 1 bis 6 auszuführen, wenn das Programm auf einem Computer ausgeführt wird.

## Revendications

1. Procédé de prévention de la perte de marchandises, notamment d'un véhicule pour le transport de marchandises ou le transport de marchandises et de passagers, comprenant une première étape d'activation et de maintien actif automatiques du frein de stationnement lorsque deux conditions sont satisfaites
- A : le véhicule est à l'arrêt ET
- B : le compartiment de chargement est ouvert ou n'est pas correctement fermé,
ledit procédé étant **caractérisé par** les étapes suivantes en séquence cyclique :
- (Étape 0) acquisition de l'état du frein de stationnement ;
- (Étape 1) Vérification des conditions A ET B, si les deux conditions sont satisfaites (A ET B = OUI) alors
- (Étape 2) première étape d'activation du frein de stationnement et d'inhibition de son desserrage ou d'inhibition de son desserrage s'il était précédemment serré,
en revanche, si l'une des conditions A ET B n'est pas satisfaite (A ET B = NON), retourner à l'étape d'acquisition (Étape 0) ;
- (Étape 3) Vérification des conditions A ET B ou vérification de la condition C, si les deux conditions sont satisfaites (A ET B = OUI) ou la condition C n'est pas satisfaite (C = NON) alors répéter l'étape de vérification des conditions A ET B ou de vérification de la condition C (Étape 3) ;
dans le cas contraire (A ET B = NON OU C = OUI)
- (Étape 4) : restaurer la condition d'activation/ de désactivation du frein de stationnement acquise avant ladite première étape et répétition du cycle à partir de l'acquisition susmentionnée (Étape 0), dans lequel la condition C se rapporte à une désactivation manuelle réalisée sur une saisie du conducteur au moyen d'une instruction spécifique, lorsque ledit véhicule est une voiture.

2. Procédé selon la revendication 1, dans lequel lorsque le véhicule est un véhicule pour le transport de marchandises, la première étape permet également l'inhibition inconditionnelle du desserrage du frein de stationnement jusqu'à ce que lesdites deux conditions A et B soient simultanément satisfaites.

3. Procédé selon la revendication 1, comprenant une deuxième étape, postérieure à ladite première étape, dans lequel lorsqu'au moins l'une des conditions précédentes (A et/ou B) n'est plus satisfaite, alors les conditions d'activation/de désactivation du frein de stationnement précédant l'exécution de ladite première étape sont restaurées.

4. Procédé selon l'une quelconque des revendications précédentes, dans lequel, lorsque ladite condition B est satisfaite, indépendamment du fait que ladite condition A soit satisfaite, un premier signal acoustique et/ou visuel est envoyé au conducteur.

5. Procédé selon la revendication 3 ou 4, dans lequel lorsque ledit véhicule est une voiture, ladite deuxième étape de restauration des conditions précédentes peut être réalisée sur une saisie du conducteur au moyen d'une instruction spécifique, et dans lequel le procédé comprend une troisième étape de présentation d'un second signal acoustique et/ou visuel, qui peut être différent dudit premier signal acoustique et/ou visuel, destiné au conducteur.

6. Procédé selon l'une quelconque des revendications précédentes, dans lequel le véhicule est considéré comme étant à l'arrêt lorsqu'une vitesse relative de déplacement est au-dessous de 3 km/h.

7. Système de prévention de la perte de marchandises d'un véhicule pour le transport de marchandises comprenant des moyens de traitement (VCU/ESP/EBS/ESR/ABS) conçus pour
- surveiller et commander un état d'activation d'un frein de stationnement de véhicule,
- surveiller une condition statique ou dynamique du véhicule,
- surveiller une condition ouverte ou pas complètement fermée d'un compartiment de chargement dans lequel lesdits moyens de traitement sont configurés pour réaliser toutes les étapes d'au moins la revendication 1.

8. Véhicule de transport de marchandises comprenant un système de prévention de la perte de marchandises du véhicule selon la revendication 7.

9. Programme d'ordinateur comprenant des moyens de codage de programme configurés pour réaliser toutes les étapes de l'une quelconque des revendications 1 à 6, lorsque ledit programme est exécuté sur un ordinateur.
